# EUROPEAN PATENT APPLICATION

(11) **EP 1 063 008 A2**
(43) Date of publication of application: **27.12.2000**
(21) Application number: 00108370.8
(22) Date of filing: 17.04.2000
(51) Int. Cl.: B01J 19/00, B01J 8/00, B01J 8/06, B01J 19/24, C01B 3/38

(54) **Reactor for carrying out a non-adiabatic process**

(30) Priority: 28.05.1999 US 136774 P
(71) Applicant: Haldor Topsoe A/S, 2800 Kgs. Lyngby (DK)
(72) Inventor: Christensen, Peter Seier, 2400 Copenhagen NV (DK)

(57) **Abstract**

Reactor for carrying out non-adiabatic reactions having at least one heat-transferring wall with decreasing or increasing wall thickness and/or with varying wall material in flow direction of a non-adiabatic reacting medium.

## Description

The present invention is concerned with a reactor for performing a process at non-adiabatic conditions. Those processes are typically carried out in heat exchangers and reactors in which heat producing or heat consuming reactions occur.

### BACKGROUND OF THE INVENTION

In reactors being operated at non-adiabatic conditions, the rate of the supply or removal of heat from the reactions is usually the limiting factor. Improving the rate will result in significant improvement of the reactor performance by increased throughput at a given reactor size or decreased reactor size for a given throughput, longer lifetime of reactor and/or increased selectivity towards the desired product.

Steam reforming of a hydrocarbon feedstock to hydrogen and carbon monoxide containing gas by the below reactions (1) and (2) is an important example of non-adiabatic processes.

CₙHₘ + n H₂O ⇔ n CO + (n + m/2) H₂ (-ΔH < 0) (1)

CO + H₂O ⇔ CO₂ + H₂ (-ΔH = 9.84 kcal/mole) (2)

The overall reaction (1) + (2) is endothermic, i.e. heat must be provided for the reaction to proceed.

State-of-the-art primary steam reformers for steam reforming of a hydrocarbon feedstock consist of a furnace in which a number of reformer tubes are placed. Feed gas consisting mainly of hydrocarbon(s) and steam, optionally with smaller amounts of H₂, CO, CO₂, N₂ and/or various impurities is introduced into the reformer tubes. The reformer furnace is provided with a number of burners, in which fuel is combusted to supply necessary heat for the above reforming reactions.

To maintain the reforming reactions, the heat must be transferred to the gas inside the reactor tubes. The heat is first transferred to the outer tube wall by radiation and convection, then through the tube wall by conduction, and finally from the inner tube wall to the gas and catalyst by radiation and convection.

The amount of heat that can be conducted through the tube wall per unit time and area, i.e. the heat flux, depends on three factors. These are the thermal conductivity of the tube material, the temperature difference between the outer tube and inner tube wall, and the ratio of the outer tube diameter to the inner tube diameter. The last factor can also be expressed as the tube wall thickness at a given tube diameter.

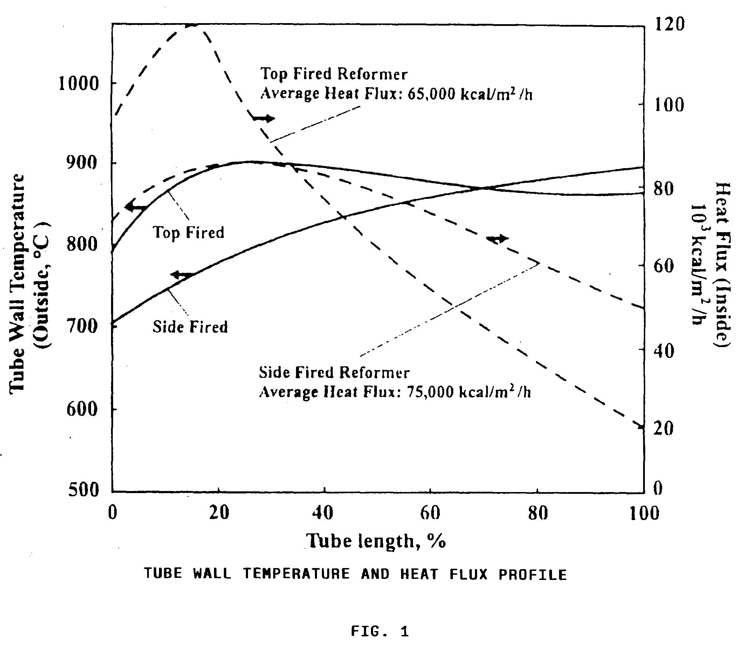

The heat flux varies along the axial direction of the tubes. The heat flux profile depends on reformer design. Typical heat flux profiles for top fired and side fired reformer types are shown in Fig. 5 in I. Dybkjær, and S. W. Madsen, Advanced reforming technologies for hydrogen production, Hydrocarbon Engineering December/January 1997/98, pages 56-65. In the attached drawings the above figure is shown as Fig. 1.

The heat flux through the tube wall is controlled by the firing pattern of the burners.

For design of a reformer tube the following parameters are essential:

The tube wall must be sufficiently thick to provide sufficient strength for the entire lifetime of the tube, and the temperature difference across the tube wall must be kept below a critical value to avoid excessive thermal stress which can otherwise lead to rapture of the tube.

The above requirements oppose each other. Tube lifetime requires a lower limit of the tube thickness, whereas temperature difference restrictions require an upper limit of the tube thickness. Hence, a compromise must be found when selecting the tube thickness.

Fig. 1 shows the profile of the tube wall temperature and the heat flux profile. As apparent from Fig. 1, the maximum tube wall temperature and the maximum heat flux do not occur at the same axial position of the tube, in particular with fired reformer types.

### SUMMARY OF INVENTION

Based on the above fact that the maximum in tube wall temperature and heat flux occur at different axial positions, this invention provides a reactor with an improved heat flux and lifetime by varying wall thickness of the reactor along the axial direction of the wall. It will thus be possible to employ a relatively thin wall at the position, where the heat flux is high, but the wall temperature is low. A thick wall is then used at regions where the heat flux is low, but the tube wall temperature is high.

For a given lifetime of the reactor the temperature at the hottest part of the reactor wall dictates the minimum wall thickness. The maximum wall thickness is dictated by the temperature difference across the reactor wall at the region, where the temperature difference is largest.

By means of the invention the reactor performance is improved by varying wall thickness of heat-transferring wall in flow direction of a non-adiabatic reacting medium. The largest wall thickness is used at the position of the highest temperature, and the thinnest tube wall is used at the position of the highest heat flux. Still, an improvement is obtained, when, furthermore, varying the tube diameter and/or the tube material in axial direction.

The reactor according to the invention can have any shape being convenient for a specific application. The reactor may be tubular or plate shaped including polygonal shapes. The heat exchanging and reacting media can be gaseous, liquid and/or solid.

### DETAILED DESCRIPTION

### Example 1

Two different wall designs were tested. The tubes of design 1 have the same wall thickness along their entire length corresponding to the known reactor design. The tubes of design 2 have thinner walls at the inlet portion of the reactor according to the invention. The tube dimensions for the two designs are given in Table 2 below.

The feed gas conditions introduced into the two different tubular reactor designs are summarised in Table 1 below.

The reaction carried out in design 1 and design 2 are the above-described endothermic catalytic steam reforming reactions.

Table 3 summarises the product gas composition at outlet of the above designs. The gas produced in design 1 and design 2 is identical. The outlet pressure in design 2 is higher than in design 1, which is an advantage.

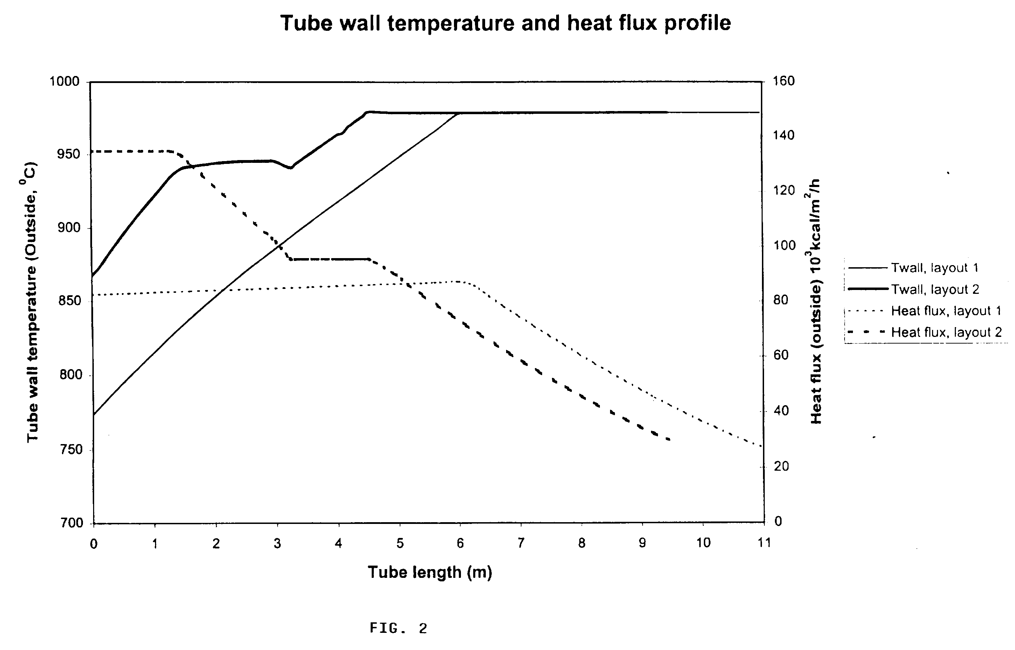

Fig. 2 shows the outer wall temperature and the heat flux for the two designs. The outer wall temperature is below the maximum operating temperature at all positions.

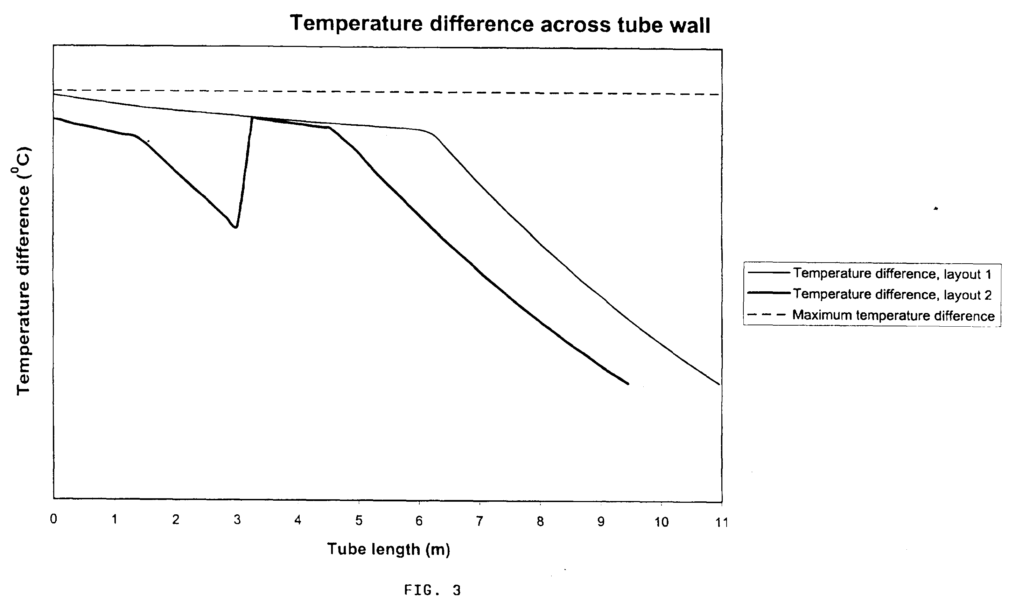

Fig. 3 shows the temperature difference across the tube wall for the two designs. The maximum temperature difference in the designs is slightly higher in design 1. The temperature difference is in both designs below the maximum allowed temperature difference. However, the tube length, and thereby the reactor size, is 14% shorter in the design according to the invention. A significant reduction in reactor size is thus obtained, when using variable tube diameter.

**Table 1**

| Feed gas conditions | | |
|---|---|---|
| Feed flow rate | Nm³/h | 105,700 |
| Temperature | °C | 635 |
| Pressure | bar | 27.5 |
| H₂ | mole % | 9.6 |
| H₂O | mole % | 59.6 |
| CO | mole % | 0.3 |
| CO₂ | mole % | 8.6 |
| CH₄ | mole % | 22.0 |

**Table 2**

| Dimension of reformer tubes | | | |
|---|---|---|---|
| Design number | | 1 | 2 |
| Length of first section | m | 10.9 | 3.0 |
| Outer/inner diameter of first section | mm | 136/108 | 136/118 |
| Maximum operating temperature of first section for 100000 h lifetime | °C | 979 | 924 |
| Length of second section | m | none | 6.6 |
| Outer/inner diameter of second section | mm | - | 136/108 |
| Maximum operating temperature of second section for 100000 h lifetime | °C | - | 979 |
| Total tube length | m | 10.96 | 9.44 |
| Number of tubes | | 200 | 200 |

**Table 3**

| Product gas | | | |
|---|---|---|---|
| Design Number | | 1 | 2 |
| Flow rate | Nm³/h | 147,300 | 147,300 |
| Temperature | °C | 930 | 930 |
| Pressure | bar | 26.1 | 26.5 |
| H₂ | mole % | 69.0 | 69.0 |
| H₂O | mole % | 20.3 | 20.3 |
| CO | mole % | 14.5 | 14.5 |
| CO₂ | mole % | 6.0 | 6.0 |
| CH₄ | mole % | 1.6 | 1.6 |

## Claims

1. Reactor for carrying out non-adiabatic reactions having at least one heat-transferring wall with decreasing or increasing wall thickness and/or with varying wall material in flow direction of a non-adiabatic reacting medium.

2. Reactor according to claim 1, wherein the non-adiabatic reactions produce or consume.

3. Reactor according to claim 1, wherein the heat transferring wall is in form of a tube.

4. Reactors according to claim 2, wherein the non-adiabatic reactions are steam reforming.

5. Reactor according to claim 1, wherein the heat-transferring wall confines a catalyst bed.

6. Reactor according to claim 5, wherein the catalyst bed is in fixed form.
